# EUROPÄISCHE PATENTANMELDUNG

(11) **EP 1 225 075 A2**
(43) Veröffentlichungstag der Anmeldung: **24.07.2002**
(21) Anmeldenummer: 02000561.7
(22) Anmeldetag: 10.01.2002
(51) Int. Cl.: B60K 7/00, B60K 17/04

(54) **Elektrischer Einzelradantrieb**

(30) Priorität: 16.01.2001 DE 10101669
(71) Anmelder: ZF FRIEDRICHSHAFEN Aktiengesellschaft, 88038 Friedrichshafen (DE)
(72) Erfinder: Mann, Egon, 88045 Friedrichshafen (DE); Stübner, Frank, 99894 Friedrichroda (DE); Stammberger, Christian, 99867 Gotha (DE); Streipardt, Peter, 99880 Waltershausen (DE)
(74) Vertreter: Zietlow, Karl-Peter

(57) **Zusammenfassung**

Ein elektrischer Einzelradantrieb weist einen Elektromotor (2) auf, dessen Abtriebswelle einstückig mit einem inneren Zentralrad (3) eines Planetengetriebes (4) verbunden ist. Das Hohlrad (5) des Planetengetriebes ist drehfest gehalten und der Planetenträger (9) bildet den Abtrieb. Die Abtriebswelle (1) des Elektromotors (2) ist einerseits über eine Lagerung (7) in dem Gehäuse (6) des Elektromotors (2) und andererseits über eine Lagerung (8) im Planetenträger (9) gelagert.

## Beschreibung

Die Erfindung betrifft einen elektrischen Einzelradantrieb nach der im Oberbegriff von Anspruch 1 näher definierten Art.

Elektrische Einzelradantriebe werden häufig in mobilen Fahrzeugen, wie z. B. Golf-Cars, eingesetzt. Bei diesen Anwendungen werden besonders auf eine kompakte Bauform und ein geringes Gewicht hohe Anforderungen gestellt.

Die EP 0 525 663 B1 offenbart einen elektrischen Einzelradantrieb, bei welchem der Elektromotor über Lenker mit dem Fahrzeugchassis verbunden ist und bei welchem die Abtriebswelle des Elektromotors einstückig mit einem inneren Zentralrad einer Planetenstufe verbunden ist, deren Hohlrad den Abtrieb bildet und deren Planeten auf einem ortsfest gehaltenen Planetenträger gelagert sind. Da die Abtriebswelle des Elektromotors starr über zwei Lager gelagert ist, das innere Zentralrad der Planetenstufe jedoch einstückig mit der Abtriebswelle verbunden ist, muß die Abtriebswelle so elastisch sein, daß sich das innere Zentralrad einstellen kann. Die erforderliche Querschnittsverkleinerung der Abtriebswelle wirkt sich jedoch negativ auf das Abtriebsdrehmoment aus.

Der vorliegenden Erfindung liegt die Aufgabe zugrunde, einen elektrischen Einzelradantrieb zu schaffen, welcher sehr kompakt baut und sich durch ein geringes Gewicht auszeichnet.

Die Aufgabe wird mit einem, auch die kennzeichnenden Merkmale des Hauptanspruchs aufweisenden, gattungsgemäßen elektrischen Einzelradantrieb gelöst.

Erfindungsgemäß weist der elektrische Einzelradantrieb einen Elektromotor auf, welcher vorzugsweise als Asynchronmotor ausgeführt ist, um sehr hohe Drehzahlen bis z. B. 6 500 U/min zu erreichen. Die Abtriebswelle des Elektromotors ist einstückig mit einem inneren Zentralrad einer Planetenstufe verbunden und vorzugsweise schrägverzahnt ausgeführt. Mindestens ein Planetenrad ist auf einem Planetenträger gelagert, welcher den Abtrieb bildet. Vorzugsweise wird das Planetengetriebe mit drei Planeten ausgeführt. Das Hohlrad des Planetengetriebes ist drehfest in dem Motorgehäuse gehalten. Das Motorgehäuse ist vorzugsweise aus Aluminium-Druckguß hergestellt, es besteht jedoch auch die Möglichkeit, es aus anderen Materialien zu fertigen. Die Abtriebswelle des Elektromotors ist an ihrem einen Ende über eine Lagerung in dem Elektromotorgehäuse und an ihrem anderen Ende in dem Planetenträger gelagert. Der Planetenträger ist über eine Radlagerung, welche die Radkräfte aufnimmt, in dem Gehäuse des Elektromotors gelagert. Das Gehäuse des Elektromotors ist über Lenker mit dem Fahrzeugchassis verbunden. Das Planetengetriebe ist einerseits benachbart zum Elektromotor und andererseits benachbart zur Radlagerung angeordnet. Zwischen dem Planetengetriebe und dem Elektromotor ist eine Trennwand mit einem Dichtelement angeordnet, welche den Raum, in welchem sich das Planetengetriebe befindet, flüssigkeitsdicht zum Elektromotor abdichtet. Im Bereich der Radlagerung ist eine Bremse angeordnet, welche vorzugsweise als Trommelbremse ausgeführt ist, es besteht jedoch auch die Möglichkeit, diese Bremse als Scheibenbremse auszuführen. Die Radlagerung ist vorzugsweise über zwei Kegelrollenlager ausgeführt, wobei die Innenringe über eine Abstandshülse distanziert sind und der Abtriebsflansch über einen Kegelschrumpfsitz auf dem Planetenträger gehalten ist. Um bei hohen Elektromotordrehzahlen ein ausreichend niedriges Geräuschniveau zu erreichen, ist das Planetengetriebe vorzugsweise schrägverzahnt und die Zähnezahlabstimmung ist so ausgeführt, daß eine ungerade Ordnungszahl erreicht wird. Vorzugsweise ist die Verzahnung des Planetengetriebes so ausgelegt, daß eine gleichzeitige Eingriffsfolge zwischen dem inneren Zentralrad und den Planetenrädern vorhanden ist.

Indem die Abtriebswelle des Elektromotors in dem Planetenträger gelagert ist, wird ein optimaler Zahneingriff in dem. Planetengetriebe erreicht. Indem der Planetenträger den Abtrieb bildet und das Hohlrad ortsfest gehalten ist, kann die größtmögliche Übersetzung des Planetengetriebes erreicht werden. Durch die Anordnung des Planetengetriebes, benachbart zum Elektromotor innerhalb des Elektromotorgehäuses, wird eine sehr kompakte Einheit erreicht. Durch die Anordnung einer Lagerstelle der Abtriebswelle des Elektromotors innerhalb des Planetengetriebes wird diese Lagerstelle ausreichend mit Schmiermittel im Planetengetriebe versorgt. Somit muß nur noch eine Lagerstelle mit einer aufwendigen Lebensdauerschmierung verwendet werden. Indem die Rädlagerung benachbart zum Planetengetriebe angeordnet ist, ist es möglich, die Radkraft optimal in die Radlägerung einzuleiten. Durch die Anordnung des Planetengetriebes im Elektromotorgehäuse kann das Gewicht des elektrischen Einzelradantriebes verringert werden.

Weitere Vorteile ergeben sich in der folgenden Figuren-Beschreibung.

Es zeigen:

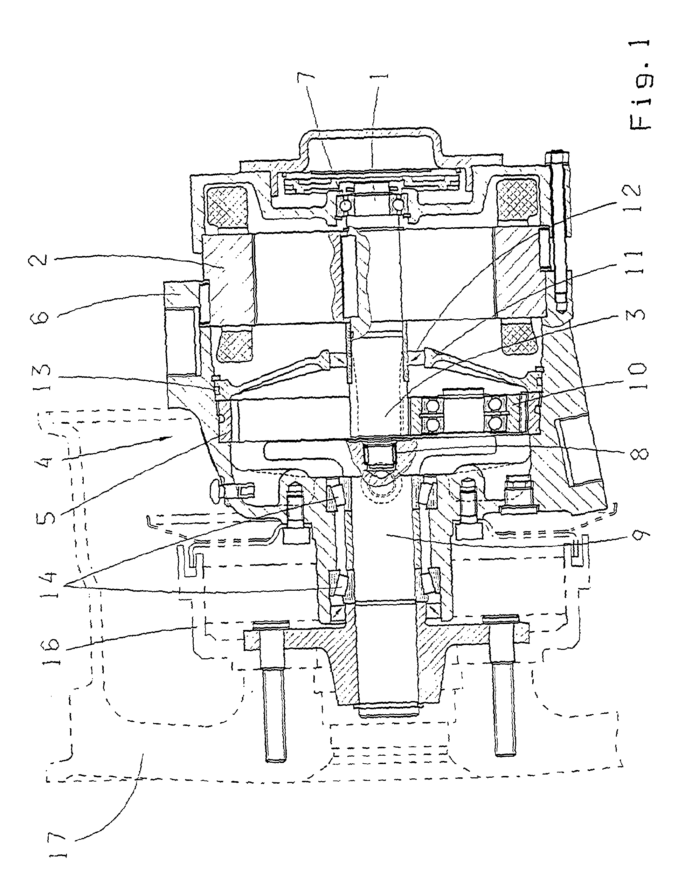

- Fig. 1: einen elektrischen Radantrieb mit einer Felge und

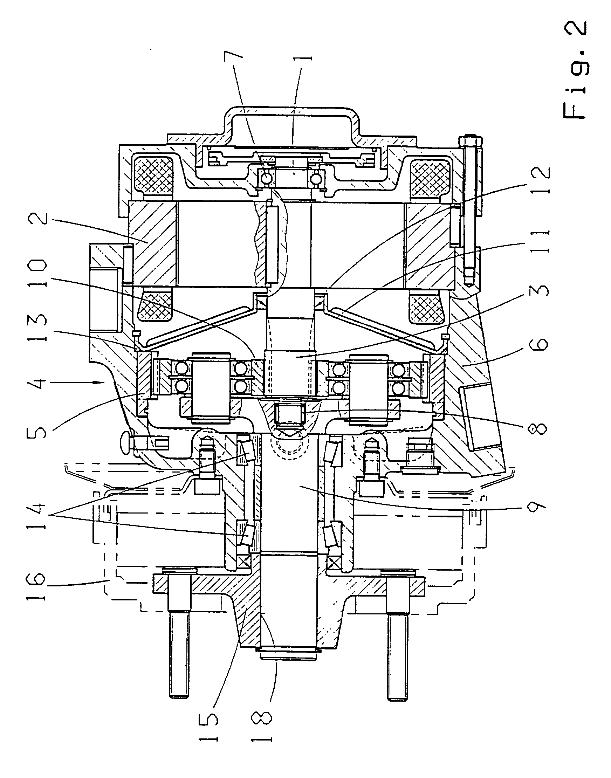

- Fig. 2: ein weiteres Ausführungsbeispiel eines elektrischen Radantriebs.

### Fig. 1:

Eine Abtriebswelle 1 eines Elektromotors 2 ist einstückig mit einem inneren Zentralrad 3 eines Planetengetriebes 4 verbunden. Das Planetengetriebe 4 weist ein ortsfest gehaltenes Hohlrad 5 auf, welches über eine selbstschneidende Verzahnung in das Gehäuse 6 des Elektromotors 2 eingeschnitten ist. Die Abtriebswelle 1 ist einerseits über ein erstes Lager 7 und andererseits über ein zweites Lager 8 gelagert. Das zweite Lager 8 ist in dem Planetenträger 9 gelagert, auf welchem auch die Planetenräder 10 gelagert sind und welcher den Abtrieb bildet. Zwischen dem Planetengetriebe 4 und dem Elektromotor 2 ist eine Trennwand 11 angeordnet, welche über ein Dichtelement 12 und ein Dichtelement 13 das Planetengetriebe flüssigkeitsdicht zum Elektromotor 2 abdichtet. Der Planetenträger 8 ist über eine Radlagerung 14 im Gehäuse 6 des Elektromotors 2 gelagert. Mit dem Planetenträger 9 ist ein Abtriebsflansch 15 verbunden, welcher mit einer Bremse 16 und einer Felge 17 in Verbindung steht. Die Radlagerung 14 kann so angeordnet werden, daß die Radkraft optimal aufgenommen werden kann.

### Fig. 2:

Ein Elektromotor 2 weist eine Abtriebswelle 1 auf, welche einstückig mit einem inneren Zentralrad 3 verbunden ist und ein Planetengetriebe 4 antreibt. Das Hohlrad 5 des Planetengetriebes 4 ist in einer Klauen-Trapezverzahnung im Gehäuse 6 schwimmend drehfest gehalten, wobei die Klauen-Trapezverzahnung in dem Gehäuse 6 des Elektromotors 2 eingegossen ist. Vorzugsweise ist das Gehäuse 6 des Elektromotors 2 aus Aluminium-Druckguß hergestellt. Der Abtriebsflansch 15 ist über einen Kegelschrumpfsitz 18 auf dem Planetenträger 10 gehalten.

### Bezugszeichen

- 1: Abtriebswelle
- 2: Elektromotor
- 3: inneres Zentralrad
- 4: Planetengetriebe
- 5: Hohlrad
- 6: Gehäuse
- 7: erstes Lager
- 8: zweites Lager
- 9: Planetenträger
- 10: Planetenräder
- 11: Trennwand
- 12: Dichtelement
- 13: Dichtelement
- 14: Radlagerung
- 15: Abtriebsflansch
- 16: Bremse
- 17: Felge
- 18: Kegelschrumpfsitz

## Patentansprüche

1. Elektrischer Einzelradantrieb, bei welchem eine Abtriebswelle (1) eines Elektromotors (2) einstückig mit einem inneren Zentralrad (3) eines Planetengetriebes (4) mit mindestens einem Planetenrad (10) und einem Hohlrad (5) und einem Planetenträger (9) verbunden ist, wobei die Abtriebswelle (1) des Elektromotors über zwei Lagerungen (7, 8) gelagert ist, **dadurch gekennzeichnet, daß** der Planetenträger (9) den Abtrieb bildet und über eine Radlagerung (14) gelagert ist und das Hohlrad (5) drehfest gehalten ist und eine erste Lagerung (7) der Abtriebswelle (1) des Elektromotors (2) in dem Endbereich der Abtriebswelle (1) angeordnet ist, welcher dem Planetengetriebe (4) entgegengesetzt angeordnet ist, und die Abtriebswelle (1) im Elektromotor (2) lagert und eine zweite Lagerung (8) die Abtriebswelle (1) im Planetenträger (9) lagert.

2. Elektrischer Einzelradantrieb nach Anspruch 1, **dadurch gekennzeichnet, daß** zwischen dem Planetengetriebe (4) und dem Elektromotor (2) eine Trennwand (11) mit einem Dichtelement (12) angeordnet ist, welche das Planetengetriebe (4) flüssigkeitsdicht vom Elektromotor (2) trennt.

3. Elektrischer Einzelradantrieb nach Anspruch 1, **dadurch gekennzeichnet, daß** das Planetengetriebe (4) innerhalb eines Gehäuses (6) des Elektromotors (2) angeordnet ist.

4. Elektrischer Einzelradantrieb nach Anspruch 1, **dadurch gekennzeichnet, daß** die Radlagerung (14) dem Planetengetriebe (4) und das Planetengetriebe (4) dem Elektromotor (2) benachbart angeordnet sind.

5. Elektrischer Einzelradantrieb nach Anspruch 1, **dadurch gekennzeichnet, daß** das Gehäuse (6) des Elektromotors (2) über Lenker mit einem Fahrzeugchassis verbunden ist.

6. Elektrischer Einzelradantrieb nach Anspruch 1, **dadurch gekennzeichnet, daß** der Planetenträger (9) über die Radlagerung (14) in einem Gehäuse (6) des Elektromotors gelagert ist.

7. Elektrischer Einzelradantrieb nach Anspruch 1, **dadurch gekennzeichnet, daß** eine Bremse (16) im Bereich der Radlagerung (14) angeordnet ist.

8. Elektrischer Einzelradantrieb nach Anspruch 1, **dadurch gekennzeichnet, daß** der Elektromotor (2) ein Asynchronmotor ist.

9. Elektrischer Einzelradantrieb nach Anspruch 1, **dadurch gekennzeichnet, daß** das Planetengetriebe (4) schrägverzahnt ist und das innere Zentralrad (3) und die Planetenräder (10) eine gleichzeitige Eingriffsfolge aufweisen.

10. Elektrischer Einzelradantrieb nach Anspruch 1, **dadurch gekennzeichnet, daß** die Zähnezahl des Planetengetriebes (4) eine ungerade Ordnungszahl aufweist.
